# FASCICULE DE BREVET EUROPEEN

(11) **EP 3 106 503 B1**
(45) Date de publication et mention de la délivrance du brevet: **07.08.2019**
(21) Numéro de dépôt: 16174941.1
(22) Date de dépôt: 17.06.2016
(51) Int. Cl.: C09K 8/584

(54) **AGENTS DESORBANTS ALKYL POLYGLUCOSIDES POUR LA RECUPERATION ASSISTEE DU PETROLE**
ALKYL-POLYGLUCOSID-DESORPTIONSMITTEL FÜR DIE UNTERSTÜTZTE RÜCKGEWINNUNG VON ERDÖL
ALKYL POLYGLUCOSIDE DESORBING AGENTS FOR ASSISTED OIL RECOVERY

(30) Priorité: 18.06.2015 FR 1501274
(43) Date de publication de la demande: 21.12.2016
(73) Titulaire: Rhodia Operations, 75009 Paris (FR); IFP Energies nouvelles, 92500 Rueil-Malmaison (FR)
(72) Inventeur: MORVAN, Mikel, 33600 PESSAC (FR); MOREAU, Patrick, 33600 PESSAC (FR); TABARY, René, 78100 SAINT GERMAIN EN LAYE (FR); BAZIN, Brigitte, 75017 PARIS (FR)
(74) Mandataire: Cordier, Pascal Christian

(56) Documents cités:
- US-A1- 2006 046 948
- US-A1- 2012 241 151
- US-A1- 2013 020 085

## Description

La présente invention a trait au domaine de la récupération assistée du pétrole brut des formations souterraines, et plus particulièrement aux problématiques de rétention des tensioactifs dans ces formations souterraines lors d'étapes de récupération assistée du pétrole.

Lors de l'extraction du pétrole hors d'un réservoir hydrocarboné (réservoir pétrolifère telle qu'une formation rocheuse, consolidée ou non, ou un sable, par exemple), selon une première étape dite de « récupération primaire », le pétrole est entraîné hors d'un puits de production par la surpression régnant naturellement au sein du réservoir. Cette récupération primaire ne permet d'accéder qu'à une faible quantité du pétrole contenu dans le réservoir, typiquement de l'ordre de 10 à 15% tout au plus.

Pour permettre de poursuivre l'extraction du pétrole suite à cette récupération primaire, des méthodes secondaires de production sont employées, quand la pression du réservoir devient insuffisante pour déplacer le pétrole encore en place. Typiquement, on injecte un fluide (ré-injection de l'eau produite diluée ou non, injection d'eau de mer ou de rivière, ou encore injection de gaz, par exemple) au sein du réservoir hydrocarboné, en vue d'exercer au sein du réservoir une surpression propre à entraîner le pétrole vers le(s) puits de production. Une technique usuelle dans ce cadre est l'injection d'eau (désignée également par inondation ou « waterflooding »), dans laquelle de grands volumes d'eau sont injectés sous pression dans le réservoir via des puits d'injecteurs. L'eau injectée entraîne une partie du pétrole qu'elle rencontre et le pousse vers un ou plusieurs puits producteur(s). Les méthodes secondaires de production telles que l'injection d'eau ne permettent toutefois d'extraire qu'une partie relativement faible des hydrocarbures en place (typiquement de l'ordre de 30%). Ce balayage partiel est dû notamment au piégeage de l'huile par les forces capillaires, aux différences de viscosité et de densité existant entre le fluide injecté et les hydrocarbures en place, ainsi qu'à des hétérogénéités à des échelles micro- ou macroscopiques (échelle des pores et aussi échelle du réservoir).

Pour essayer de récupérer le reste du pétrole, qui demeure dans les formations souterraines à l'issue de la mise en oeuvre des méthodes primaires et secondaires de production, il a été proposé différentes techniques dites de « récupération assistée du pétrole » (ou récupération assistée (ou améliorée) d'hydrocarbures RAH), ou bien encore « EOR » (pour l'anglais « *Enhanced Oil Recovery*»). Parmi ces techniques, on peut citer des techniques s'apparentant à l'injection d'eau (inondation) précitée, mais employant une eau comprenant des additifs tels que, par exemple, des agents tensioactifs solubles dans l'eau (on parle alors typiquement de « *surfactant flooding* »). L'emploi de tels agents tensioactifs induit notamment une diminution de la tension interfaciale eau/pétrole, qui est propre à assurer un entraînement plus efficace du pétrole piégé dans les constrictions de pores.

Les tensioactifs usuellement préconisés dans ce cadre sont typiquement des tensioactifs anioniques, notamment de type sulfate ou sulfonate. Bien qu'ils s'avèrent effectivement efficaces pour abaisser la tension interfaciale eau/pétrole, ces tensioactifs anioniques présentent un inconvénient, à savoir qu'ils tendent à rester piégés au sein des formations souterraines, typiquement compte tenus de phénomènes d'adsorption chimique à la surface des roches, ce qui affecte de façon notable l'efficacité de la récupération et/ou les coûts de procédé.

Entre autres, les tensioactifs ainsi immobilisés au sein du réservoir ne peuvent plus participer à la mobilisation du pétrole et à son extraction, et l'efficacité de l'extraction se trouve dès lors affectée. Une forte adsorption peut être compensée par la mise en oeuvre de concentrations élevées de tensioactifs mais avec des répercussions en termes de coûts. Plus généralement, les phénomènes d'adsorption des tensioactifs impactent négativement les coûts de l'extraction.

Les phénomènes d'adsorption des tensioactifs anioniques précités sont tout particulièrement nets :
- lorsqu'on emploie les tensioactifs au sein d'une eau à fortes teneurs en sel et/ou en cations divalents (eau de mer notamment) ; et
- dans certaines formations rocheuses, telles que les carbonates ou les roches argileuses comme des grès argileux (où l'adsorption est élevée, même si on évite des eaux à fortes teneurs en sel et/ou en ions divalents).

Pour inhiber les phénomènes d'adsorption des tensioactifs, il a été proposé différentes solutions plus ou moins efficaces et généralement limitées à des conditions de mise en oeuvre spécifiques.

Ainsi, en particulier, il a été proposé la mise en oeuvre d'agents sacrificiels, censés présenter une affinité plus grande pour la roche que les espèces tensioactives employées pour la récupération assistée de pétrole. Dans ce cadre, il a été décrit l'emploi possible de lignosulfonates ou de poly(oxyde d'éthylène) de faible masse moléculaire, dont l'efficacité est variable, en fonction notamment de la nature des tensioactifs, de la roche et des conditions de salinité.

Plus récemment, il a été proposé, notamment dans la demande FR 2 986 008, l'emploi de tensioactifs non ioniques éthoxylés tel que le Rhodasurf® LA 12 disponible auprès de la société Solvay, qui permettent de s'affranchir efficacement des effets néfastes de la rétention des tensioactifs anioniques au sein de réservoirs pétrolifères.

La demande US 2006/046948 décrit un procédé d'extraction qui utilise un mélange améliorant l'extraction incluant un alkyl polyglucoside (APG) et un alcool. L'alcool est décrit comme un co-surfactant hydrophobe employé pour accroître l'effet de l'APG.

Un but de la présente invention est de fournir un moyen encore plus efficace de limiter, voire de s'affranchir des effets néfastes de la rétention des tensioactifs anioniques, notamment de type sulfates et/ou sulfonates, au sein de réservoirs pétrolifères lors d'étapes de récupération assistée du pétrole, et ce tout particulièrement dans des roches pétrolifères de type carbonate ou roches argileuses.

A cet effet, il est proposé selon la présente invention de mettre en oeuvre des alkyl polyglucosides qui s'avèrent plus efficaces encore, notamment dans des conditions de températures et de salinité difficiles.

Plus précisément, la présente invention propose l'utilisation d'au moins un composé de formule suivante :

R-O-(A)ₘ-H (I)

dans laquelle :
R est un groupe hydrocarboné comprenant de 6 à 40, par exemple de 8 à 24, atomes de carbone
A est une unité hexose ou pentose,
m (qui correspond au nombre d'unités A) est un nombre non nul allant de 1 à 10, entier ou non,
pour inhiber les phénomènes de rétention de tensioactifs anioniques au sein d'un réservoir pétrolifère (la notion de « tensioactifs anioniques » lorsque cette expression est employée au pluriel dans la présente description et dans les revendications se réfère à une population d'au moins un tensioactif anionique, à savoir soit plusieurs tensioactifs anioniques d'un seul et même type, soit un mélange de plusieurs types de tensioactifs anioniques).

De préférence, un composé de formule (I) utile selon l'invention a une HLB (de l'anglais «Hydrophilic-Lipophilic Balance», signifiant équilibre hydrophile/lipophile) inférieure à 14, et typiquement supérieure à 10, par exemple entre 11 et 14.

Les travaux réalisés par les inventeurs dans le cadre de la présente invention ont permis de mettre en évidence que les composés de formule (I) précités, et notamment ceux ayant une HLB inférieure à 14, sont des agents hydrosolubles qui présentent la propriété particulièrement intéressante de désorber les tensioactifs anioniques lorsqu'ils sont injectés en solution aqueuse dans des roches (réservoirs pétrolifères) où ces tensioactifs anioniques ont été préalablement adsorbés. En ce sens, les composés de formule (I) peuvent être qualifiés d'agents désorbants des tensioactifs anioniques.

Les composés de formule (I) permettent en particulier de désorber de façon particulièrement efficace des tensioactifs anioniques de type sulfate et/ou sulfonate des roches pétrolifères, notamment des mélanges de tensioactifs primaires de type oléfine sulfonate ou alkylarylsulfonate et secondaires de type alkyl ether sulfate ou alkyl ether glyceryl sulfonate.

Plus généralement, les composés de formule (I) peuvent désorber la plupart des tensioactifs anioniques employés pour la récupération assistée de pétrole, notamment des tensioactifs anioniques de type carboxylate, phosphates et/ou phosphonate.

Au sens de la présente invention, la notion de tensioactif anionique englobe tous les tensioactifs porteurs d'au moins un groupe anionique dans les conditions de l'extraction réalisée. Ainsi, un tensioactif anionique englobe non seulement les sulfates et sulfonates précités, mais également d'autres types de tensioactifs, incluant les tensioactifs à caractère zwitterionique. Les composés de formule (I) sont bien adaptés à la désorption de tensioactifs purement anioniques (à savoir porteurs non porteurs de charges positives). Cela étant, selon un mode de réalisation spécifique, les composés de formule (I) peuvent éventuellement être employés pour désorber des composés à caractère zwitterionique (seuls ou mélangés à des tensioactifs purement anioniques) .

Les composés de formule (I) peuvent par ailleurs inhiber l'effet de rétention des tensioactifs anioniques, notamment du type précité, lorsqu'ils sont introduits conjointement auxdits tensioactifs anioniques. En ce sens, ils peuvent également être considérés comme des agents anti-rétention des tensioactifs anioniques au sein de roches pétrolifères (réservoirs pétrolifères). Dans ce cadre, les composés de formule (I) peuvent en particulier être employés pour éviter la rétention des agents tensio-actifs anioniques aussi bien lorsque ceux-ci sont employé sous la forme d'un liquide d'extraction que lorsqu'ils sont sous la forme d'une mousse (obtenue par injection du tensioactif anionique et du composé de formule (I) en milieu aqueux dans la roche pétrolifère puis injection d'un gaz, typiquement selon le procédé dit « WAG »). Les composés de formule (I) sont notamment propres à améliorer l'effet de la mousse, en évitant des phénomènes de rétention dans la roche.

Par ailleurs, lorsqu'ils sont introduits au sein de roches pétrolifères (réservoirs pétrolifères) préalablement à l'injection de tensioactifs anioniques, notamment du type précité, les composés de formule (I) permettent de prévenir l'effet de rétention des tensioactifs anioniques, en limitant la quantité de tensioactifs anioniques qui s'adsorbe sur la roche. En cela, les composés de formule (I) peuvent également être décrits comme des agents sacrificiels.

Il s'avère de plus que ces différentes propriétés sont obtenues aussi bien à de faibles teneurs en sels et en cations divalents qu'à forte teneur en ces sels ou cations (notamment en employant de l'eau de mer comme solvant des tensioactifs), et ce y compris dans des roches de type carbonates ou grès argileux.

De plus, les effets observés dans le cadre de la présente invention n'impliquent pas des concentrations élevées en composé de formule (I). Typiquement, dans le cadre de la présente invention, les composés de formule (I) peuvent être employés - seuls ou sous forme d'un mélange de plusieurs tensio-actifs non ioniques de formule (I) - dans des fluides aqueux comprenant ces composés à une concentration qui n'a pas à dépasser 5 g/L, et qui peut par exemple être comprise entre 0,1 et 4g/L, de préférence entre 0,5 et 2 g/L.

Outre les avantages précités, les composés de formule (I) utiles selon l'invention peuvent au moins dans certains cas améliorer la solubilité dans l'eau d'agents tensioactifs anioniques, notamment de type sulfates ou sulfonate. Les composés de formule (I) permettent en cela d'améliorer l'injectivité de certains tensioactifs anioniques, notamment des mélanges de tensioactifs primaires de type oléfine sulfonate ou alkylarylsulfonate et secondaires de type alkyl éther sulfate ou sulfonate, lorsqu'ils sont ajoutés conjointement à ces tensioactifs.

De plus, l'emploi des composés de formule (I), qui sont des tensioactifs non ioniques, est de nature à pouvoir améliorer la compatibilité des tensioactifs anioniques, notamment de type sulfonate, avec d'autres composés qui sont employés en EOR, tels que par exemple des polymères viscosants comme des polyacrylamides partiellement hydrolysés, par exemple, ce qui constitue encore un autre avantage des composés de formule (I).

Selon un mode de réalisation intéressant, les composés de formule (I) sont utilisés conjointement à au moins un polymère viscosant. Selon ce mode de réalisation, l'effet d'inhibition des phénomènes de rétention de tensioactifs anioniques ou leur désorption se révèle en général tout particulièrement intéressant. Le plus souvent, on observe un effet amélioré en présence du polymère additionnel, voire un effet de synergie dans certains cas (l'effet d'inhibition de la rétention des tensioactifs sur la roche est en général plus important que la simple addition de l'effet observé en présence d'un composé (I) sans polymère et de l'effet observé en présence du polymère sans le composé de formule (I) ). Un tel effet de synergie est par exemple observé, notamment pour les tensioactifs ou formulations de type sulfate ou sulfonate, en employant des polymères additionnels qui sont choisis parmi les polyacrylamides, de préférence partiellement hydrolysés.

Les composés de formule (I) peuvent notamment être utilisés conjointement à des polymères viscosants choisis parmi :
- les polymères hydrophiles incluant les homo-, les co-, ou les ter- polymères tels que, par exemple, des polymères de type acrylate d'alkyle, modifié ou non, éventuellement porteurs de substituants tels que des groupes acide 2-acrylamido-2methyl propane sulfonique, N,N-diméthylacrylamide, vinylpyrrolidone, méthacrylate de diméthylaminethyle, acide acrylique, acétate de vinyle, acide vinylsulfonique, ou acide methacrylique.
- les biopolymères tels que les guars ou la gomme xanthane, par exemple.

Dans les composés de formule (I), le groupe -R est un groupe hydrocarboné, linéaire ou ramifié, saturé ou instauré, éventuellement cyclisé en tout ou partie(s). Bien que la présence d'hétéroatomes (N, P, ou halogènes) ne soit pas exclue, dans l'absolu, sur ce groupe R, il s'agit le plus souvent d'un groupe qui comporte uniquement des atomes d'hydrogène et de carbone. Le groupe -R comporte de préférence au moins 6 atomes de carbone, plus préférentiellement au moins 10 atomes de carbone. Ce nombre d'atome de carbone reste par ailleurs de préférence inférieur ou égal à 30, préférentiellement inférieur ou égal à 20.

Selon un mode de réalisation intéressant, le groupe -R est un groupe hydrocarboné du type précité comprenant de l'ordre de 12 atomes de carbone. Ce groupe -R est linéaire ou ramifié, et généralement non cyclique, bien qu'il puisse, selon certains modes de réalisation, être éventuellement cyclisé en tout ou partie.

Le groupe -R est de préférence un groupe hydrocarboné comportant uniquement des atomes d'hydrogène et de carbone, par exemple choisi parmi les alkyles, les aryles, les arylalkyles, les alkylaryles. Il peut ainsi typiquement s'agir d'un groupe alkyle ou alcényle, linéaire ou ramifié, comportant alors de préférence de 6 à 18 atomes de carbone, plus avantageusement de 10 à 16 atomes de carbone. A titre de groupements R particulièrement bien adaptés à la mise en oeuvre de l'invention, on peut notamment citer les groupes alkyles linéaires hexyle, heptyle, octyle, nonyle, décyle, undécyle, dodécyle, tridécyle, tétradécyle et pentadécyle, et les groupes 2-éthylhexyle.

Selon un mode de réalisation particulier, le groupe -R est un groupe dodécyle -(CH₂)₁₁-(CH₃).

Les composés de formule (I) employés dans le cadre de la présente invention comportent de préférence, à titre de groupement R, un groupe alkyl en C₁₀ à C₁₈, par exemple un groupe alkyle linéaire en C₁₀ à C₁₅.

Dans les composés de formule (I), chacune des unités A peut être choisie parmi :
- les unités hexoses telles que les allose, altrose, glucose, mannose, gulose, idose, galactose or talose.
- les unités pentoses comme les ribose, arabinose, xylose or lyxose (I).

Par ailleurs, dans les composés de formule (I), m est de préférence inférieur ou égal à 7, et plus préférentiellement inférieur ou égal à 5.

Ainsi, m peut notamment être égal à 1, 2, 3 ou 4.

Quelle que soit la valeur de m, chacun des m groupe A, identiques ou différents, est de préférence un radical glucose ou xylose. Plus préférentiellement, il s'agit d'un radical glucose.

Dans certains cas, on peut employer un mélange de plusieurs composé de formule (I). Dans ce cas, chacun des composés est caractérisé par une valeur entière de m dans les gammes précitées et on peut définir une valeur moyenne de mₙ potentiellement non entière, pour l'ensemble des composés.

Les composés (I) utiles selon l'invention peuvent être préparés selon tout procédé connu en soi, et notamment par des réactions catalysées par des acides, où on fait réagir des alcools ROH avec des sucres en éliminant l'eau en formation, comme par exemple la réaction décrite dans US 3,547,828 ou US 5,898,070.

Des composés de formule (I) intéressant selon la présente invention sont notamment les alkylpolyglucosides disponibles auprès de la société SEPPIC sous le nom de SIMULSOL®, et en particulier les SIMULSOL® ayant une HLB entre 11 et 14, comme les SIMULSOL® SL8, SL10, SL11W ou SL55.

De préférence, les composés de formule (I) précités sont employés pour inhiber les phénomènes de rétention de tensioactifs anioniques choisis parmi :
- les agents anioniques de type sulfonate et/ou sulfate ;
- les mélanges de tensioactifs anioniques comprenant un ou plusieurs agents anioniques de type sulfonate et/ou sulfate, ces mélanges ne comprenant, de préférence, pas de tensioactifs non ioniques.

De préférence, les composés de formule (I) sont utilisés à titre d'agents désorbants de tensioactifs anioniques.

Selon un aspect plus spécifique, la présente invention a pour objet les procédés de récupération assistée du pétrole d'une formation souterraine, qui mettent à profit au moins un des emplois précités des composés de formule (I), le composé de formule (I) étant de préférence au moins employé comme désorbant.

Ainsi, selon un premier mode de réalisation, particulièrement intéressant, la présente invention a notamment pour objet un procédé de récupération assistée du pétrole d'une formation souterraine, dans lequel :
- on injecte dans ladite formation souterraine, par au moins un puits d'injection, un fluide comprenant au moins un milieu aqueux, un tensioactif anionique, et éventuellement au moins un tensioactif anionique additionnel, dit « co-tensioactif anionique » (ce fluide étant typiquement exempt de tensioactif non ionique et pouvant éventuellement comprendre un polymère, par exemple un polyamide partiellement hydrolysé) ; puis
- on injecte ensuite par le ou les même(s) puits d'injection un fluide comprenant un composé de formule (I) du type précité ; et
- on récupère, par au moins un moyen de production, un fluide véhiculant le pétrole sortant de la formation souterraine.

Selon un autre mode de réalisation compatible éventuellement avec le précédent, la présente invention a pour objet un procédé de récupération assistée du pétrole d'une formation souterraine, dans lequel :
- on injecte dans ladite formation souterraine, par au moins un puits d'injection, un fluide comprenant au moins un milieu aqueux, un composé de formule (I) du type précité, un tensioactif anionique, et éventuellement un co-tensioactif anionique (ce fluide étant typiquement exempt de tensioactif non ionique autre que le composé (I) et pouvant éventuellement comprendre un polymère, par exemple un polyamide partiellement hydrolysé); puis
- on récupère, par au moins un moyen de production, un fluide véhiculant le pétrole sortant de la formation souterraine.

Selon encore un autre mode de réalisation intéressant, compatible éventuellement avec l'un et/ou l'autre des modes précédent, la présente invention a pour objet un procédé de récupération assistée du pétrole d'une formation souterraine, dans lequel :
- on injecte dans ladite formation souterraine, par au moins un puits d'injection, un fluide comprenant un composé de formule (I) du type précité, puis
- on introduit un fluide comprenant au moins un milieu aqueux, un tensioactif anionique, et éventuellement un co-tensioactif anionique (ce fluide étant typiquement exempt de tensioactif non ionique et pouvant éventuellement comprendre un polymère, par exemple un polyamide partiellement hydrolysé) ; puis
- on récupère, par au moins un moyen de production, un fluide véhiculant le pétrole sortant de la formation souterraine.

Les différentes variantes des procédés de l'invention peuvent avantageusement être mis en oeuvre pour la récupération assistée du pétrole dans des formations souterraines qui sont des roches carbonatées ou argileuses (grès argileux notamment), consolidées ou non. Cela étant, l'invention ne saurait se limiter à de tels réservoirs uniquement.

L'exemple ci-après illustre un mode de réalisation non limitatif de l'invention et des avantages afférents aux composés de formule (I).

### EXEMPLE

Cet exemple illustre l'effet de composés de formule (I) sur l'inhibition de l'adsorption d'une formulation de tensioactifs anioniques (mélange 50/50 en masse d'oléfine sulfonate de sodium et d'alkyl ether sulfate de sodium).

La formulation de tensioactifs anioniques employée dans cet exemple a été préparée dans de l'eau de mer de la Mer du Nord (salinité 35,16).

L'adsorption a été mesurée par une méthode classique sur une roche broyée (grès de Clashach), en référence à la surface spécifique de la roche, déterminée par la méthode BET au Krypton.

Les résultats obtenus sont reportés dans le tableau ci-dessous, où l'adsorption est exprimée en mg de tensioactifs anioniques par mètres carrés de surface rocheuse.

**Tableau :**

| **Agent ajouté (2 g/l)** | **Eau de mer 20°C** | **Eau de mer 80°C** |
|---|---|---|
| Témoin : **aucun agent ajouté** | 5 | |
| Simulsol® SL8 **(HLB = 13.8)** | 2,8 | |
| Simulsol® SL10 **(HLB = 12.6)** | 2 | 3.1 |
| Simulsol® SL11W **(HLB=12.4)** | 3,3 | |
| Simulsol® SL55 **(HLB=12.1)** | 3 | |

## Revendications

1. Utilisation d'au moins un composé de formule (I) suivante :
**R-O-(A)ₘ-H** **(I)**
où :
R est un groupe hydrocarboné comprenant de 6 à 40, par exemple de 8 à 24 atomes de carbone
A est une unité hexose ou pentose,
m est un nombre non nul allant de 1 à 10, entier ou non,
pour inhiber les phénomènes de rétention de tensioactifs anioniques au sein d'un réservoir pétrolifère.

2. Utilisation selon la revendication 1, où le composé de formule (I) a une HLB inférieure à 14.

3. Utilisation selon la revendication 1 ou 2, où le tensio-actif non ionique de formule (I) est utilisé pour désorber des au moins un tensioactifs anioniques préalablement piégés dans le réservoir, le tensioactif non ionique de formule (I) étant injecté en solution aqueuse dans un réservoir pétrolifère où lesdits tensioactifs anioniques ont été préalablement adsorbés.

4. Utilisation selon la revendication 3, où les tensioactifs anioniques sont :
- des agents anioniques de type sulfonate et/ou sulfate ;
- des mélanges de tensioactifs anioniques comprenant un ou plusieurs agents anioniques de type sulfonate et/ou sulfate, ces mélanges ne comprenant, de préférence, pas de tensioactifs non ioniques.

5. Utilisation selon la revendication 3, où les tensioactifs anioniques sont des tensioactifs de type carboxylate, phosphates et/ou phophonate, ou des tensioactifs à caractère zwitterionique.

6. Utilisation selon la revendication 1 ou 2, où le tensio-actif non ionique de formule (I) est introduit conjointement auxdits tensioactifs anioniques, et est utilisé à titre d'agent anti-rétention des tensioactifs anioniques au sein du réservoir pétrolifère.

7. Utilisation selon la revendication 1 ou 2, où le tensio-actif non ionique de formule (I) est introduit au sein du réservoir préalablement à l'injection de tensioactifs anioniques, à titre d'agent sacrificiel, à savoir pour prévenir l'effet de rétention des tensioactifs anioniques, en limitant la quantité de tensioactifs anioniques qui s'adsorbent..

8. Utilisation selon l'une des revendications 1 à 7, où le tensio-actif non ionique de formule (I) est employé conjointement à au moins un polymère viscosant, par exemple un polyacrylamide partiellement hydrolysé.

9. Utilisation selon l'une des revendications 1 à 8, où le groupe -R présent sur le tensio-actif non ionique de formule (I) est un groupe alkyle ou alcényle, linéaire ou ramifié, comportant de préférence de 6 à 18 atomes de carbone, plus avantageusement de 10 à 16 atomes de carbone, R étant de préférence un groupe alkyle.

10. Procédé de récupération assistée du pétrole d'une formation souterraine mettant en oeuvre l'utilisation selon la revendication 1, dans lequel :
- on injecte dans ladite formation souterraine, par au moins un puits d'injection, un fluide comprenant au moins un milieu aqueux, un tensioactif anionique, et éventuellement un co-tensioactif anionique ; puis
- on injecte ensuite par le ou les même(s) puits d'injection un fluide comprenant un composé de formule (I) tel que défini dans la revendication 1 ; et
- on récupère, par au moins un moyen de production, un fluide véhiculant le pétrole sortant de la formation souterraine.

11. Procédé de récupération assistée du pétrole d'une formation souterraine mettant en oeuvre l'utilisation selon la revendication 1, dans lequel :
- on injecte dans ladite formation souterraine, par au moins un puits d'injection, un fluide comprenant au moins un milieu aqueux, un tensioactif anionique, et éventuellement un co-tensioactif anionique, ce fluide étant de préférence exempt de tensioactif non ionique, et un composé de formule (I) tel que défini dans la revendication 1 ; puis
- on récupère, par au moins un moyen de production, un fluide véhiculant le pétrole sortant de la formation souterraine.

12. Procédé de récupération assistée du pétrole d'une formation souterraine mettant en oeuvre l'utilisation selon la revendication 1, dans lequel :
- on injecte dans ladite formation souterraine, par au moins un puits d'injection, un fluide comprenant un composé de formule (I) tel que défini dans la revendication 1, puis
- on introduit un fluide comprenant au moins un milieu aqueux, un tensioactif anionique, et éventuellement un co-tensioactif anionique ; puis
- on récupère, par au moins un moyen de production, un fluide véhiculant le pétrole sortant de la formation souterraine.

13. Procédé selon l'une des revendications 10 à 12, où la formation souterraine est une roche carbonatée ou argileuse.

## Patentansprüche

1. Verwendung mindestens einer Verbindung der folgenden Formel (I):
**R-O-(A)ₘ-H** **(I)**
wobei:
R für eine Kohlenwasserstoffgruppe mit 6 bis 40 Kohlenstoffatomen, beispielsweise 8 bis 24 Kohlenstoffatomen, steht,
A für eine Hexose- oder Pentose-Einheit steht,
m für eine von null verschiedene ganze oder gebrochene Zahl im Bereich von 1 bis 10 steht,
um das Phänomen des Zurückbleibens anionischer Tenside in einer Erdöllagerstätte zu hemmen.

2. Verwendung nach Anspruch 1, wobei die Verbindung nach Formel (I) einen HLB-Wert von weniger als 14 aufweist.

3. Verwendung nach Anspruch 1 oder 2, wobei das nichtionische Tensid der Formel (I) dazu verwendet wird, einige mindestens ein anionische Tenside zu desorbieren, die zuvor in der Lagerstätte zurückgehalten wurden, wobei das nichtionische Tensid nach Formel (I) in wässriger Lösung in eine Erdöllagerstätte injiziert wird, in welcher die anionischen Tenside zuvor adsorbiert wurden.

4. Verwendung nach Anspruch 3, wobei es sich bei den anionische Tensiden um Folgendes handelt:
- anionische Mittel vom Typ Sulfonat und/oder Sulfat;
- Mischungen anionischer Tenside, die ein oder mehrere anionische Mittel vom Typ Sulfonat und/oder Sulfat umfassen, wobei diese Mischungen vorzugsweise keinerlei nichtionische Tenside umfassen.

5. Verwendung nach Anspruch 3, wobei es sich bei den anionischen Tensiden um Tenside vom Typ Carboxylat, Phosphat und/oder Phosphonat handelt, oder um zwitterionische Tenside.

6. Verwendung nach Anspruch 1 oder 2, wobei das nichtionische Tensid der Formel (I) gemeinsam mit den anionischen Tensiden eingebracht wird und als Mittel verwendet wird, welches dem Zurückbleiben der anionischen Tenside in der Erdöllagerstätte entgegenwirkt.

7. Verwendung nach Anspruch 1 oder 2, wobei das nichtionische Tensid der Formel (I) als nicht rückholbares Mittel in die Lagerstätte eingebracht wird, bevor die anionischen Tenside injiziert werden, um nämlich einer rückhaltenden Wirkung auf die anionischen Tenside dadurch vorzubeugen, dass die Menge an anionischen Tensiden beschränkt wird, die eine Adsorption erfahren.

8. Verwendung nach einem der Ansprüche 1 bis 7, wobei das nichtionische Tensid der Formel (I) gemeinsam mit mindestens einem viskositätserhöhenden Polymer, beispielsweise einem teilweise hydrolysierten Polyacrylamid, zum Einsatz kommt.

9. Verwendung nach einem der Ansprüche 1 bis 8, wobei es sich bei der Gruppe -R, die an dem nichtionischen Tensid der Formel (I) vorliegt, um eine lineare oder verzweigte Alkyl- oder Alkenylgruppe, die vorzugsweise 6 bis 18 Kohlenstoffatome und vorteilhafter 10 bis 16 Kohlenstoffatome umfasst, handelt, wobei R vorzugsweise eine Alkylgruppe ist.

10. Verfahren zur tertiären Erdölgewinnung aus einer unterirdischen Formation, wobei die Verwendung nach Anspruch 1 zum Einsatz gebracht wird und wobei:
- über mindestens einen Injektionsschacht ein Fluid in die unterirdische Formation injiziert wird, welches mindestens ein wässriges Medium, ein anionisches Tensid und möglicherweise ein anionisches Co-Tensid umfasst; woraufhin
- anschließend in den/dieselben Injektionsschacht/-schächte ein Fluid injiziert wird, das eine Verbindung der Formel (I) gemäß der Begriffsbestimmung in Anspruch 1 umfasst; und
- mit Hilfe mindestens eines Produktionsmittels ein Fluid zurückgewonnen wird, in welchem sich das Erdöl befindet, das aus der unterirdischen Formation stammt.

11. Verfahren zur tertiären Erdölgewinnung aus einer unterirdischen Formation, wobei die Verwendung nach Anspruch 1 zum Einsatz gebracht wird und wobei:
- über mindestens einen Injektionsschacht ein Fluid, das mindestens ein wässriges Medium, ein anionisches Tensid und möglicherweise ein anionisches Co-Tensid umfasst, wobei dieses Fluid vorzugsweise frei von nichtionischen Tensiden ist, und eine Verbindung der Formel (I) gemäß der Begriffsbestimmung in Anspruch 1 in die unterirdische Formation injiziert werden; woraufhin
- mit Hilfe mindestens eines Produktionsmittels ein Fluid zurückgewonnen wird, in welchem sich das Erdöl befindet, das aus der unterirdischen Formation stammt.

12. Verfahren zur tertiären Erdölgewinnung aus einer unterirdischen Formation, wobei die Verwendung nach Anspruch 1 zum Einsatz gebracht wird und wobei:
- über mindestens einen Injektionsschacht ein Fluid, das eine Verbindung der Formel (I) gemäß der Begriffsbestimmung in Anspruch 1 umfasst, in die unterirdische Formation injiziert wird, woraufhin
- ein Fluid, das mindestens ein wässriges Medium, ein anionisches Tensid und möglicherweise ein anionisches Co-Tensid umfasst, eingebracht wird; woraufhin
- mit Hilfe mindestens eines Produktionsmittels ein Fluid zurückgewonnen wird, in welchem sich das Erdöl befindet, das aus der unterirdischen Formation stammt.

13. Verfahren nach einem der Ansprüche 10 bis 12, wobei es sich bei der unterirdischen Formation um carbonat- oder tonbasiertes Gestein handelt.

## Claims

1. Use of at least one compound of formula (I) below:
**R-O-(A)ₘ-H** **(I)**
in which:
R is a hydrocarbon-based group comprising from 6 to 40, for example from 8 to 24, carbon atoms;
A is a hexose or pentose unit;
m is a non-zero integer or fraction ranging from 1 to 10;
for inhibiting the anionic-surfactant retention phenomena in an oil reservoir.

2. Use according to Claim 1, in which the compound of formula (I) has an HLB of less than 14.

3. Use according to Claim 1 or 2, in which the nonionic surfactant of formula (I) is used for desorbing some at least one anionic surfactants trapped beforehand in the reservoir, the nonionic surfactant of formula (I) being injected in aqueous solution into an oil reservoir into which said anionic surfactants have been adsorbed beforehand.

4. Use according to Claim 3, in which the anionic surfactants are:
- anionic agents of sulfonate and/or sulfate type;
- mixtures of anionic surfactants comprising one or more anionic agents of sulfonate and/or sulfate type, these mixtures preferably not comprising nonionic surfactants.

5. Use according to Claim 3, in which the anionic surfactants are surfactants of carboxylate, phosphate and/or phosphonate type, or surfactants of zwitterionic nature.

6. Use according to Claim 1 or 2, in which the nonionic surfactant of formula (I) is introduced in combination with said anionic surfactants, and is used as an anionic-surfactant anti-retention agent in the oil reservoir.

7. Use according to Claim 1 or 2, in which the nonionic surfactant of formula (I) is introduced into the reservoir prior to the injection of anionic surfactants, as a sacrificial agent, i.e. for preventing the anionic-surfactant retention effect, by limiting the amount of anionic surfactants that become adsorbed.

8. Use according to one of Claims 1 to 7, in which the nonionic surfactant of formula (I) is used in combination with at least one viscosity-enhancing polymer, for example a partially hydrolyzed polyacrylamide.

9. Use according to one of Claims 1 to 8, in which the group -R present on the nonionic surfactant of formula (I) is a linear or branched alkyl or alkenyl group, preferably comprising from 6 to 18 carbon atoms, more advantageously from 10 to 16 carbon atoms, R preferably being an alkyl group.

10. Process of enhanced oil recovery from an underground formation involving the use according to Claim 1, in which:
- a fluid comprising at least an aqueous medium, an anionic surfactant and optionally an anionic cosurfactant is injected into said underground formation, via at least one injection well; and then
- a fluid comprising a compound of formula (I) as defined in Claim 1 is subsequently injected via the same injection well(s); and
- a fluid conveying the oil leaving the underground formation is recovered by at least one production means.

11. Process of enhanced oil recovery from an underground formation involving the use according to Claim 1, in which:
- a fluid comprising at least an aqueous medium, an anionic surfactant and optionally an anionic cosurfactant, this fluid preferably being free of nonionic surfactant, and a compound of formula (I) as defined in Claim 1 is injected into said underground formation, via at least one injection well; and then
- a fluid conveying the oil leaving the underground formation is recovered by at least one production means.

12. Process of enhanced oil recovery from an underground formation involving the use according to Claim 1, in which:
- a fluid comprising a compound of formula (I) as defined in Claim 1 is injected into said underground formation, via at least one injection well; and then
- a fluid comprising at least an aqueous medium, an anionic surfactant and optionally an anionic cosurfactant is introduced; and then
- a fluid conveying the oil leaving the underground formation is recovered by at least one production means.

13. Process according to one of Claims 10 to 12, in which the underground formation is a carbonate-based or argillaceous rock.
